# EUROPEAN PATENT APPLICATION

(11) **EP 4 653 857 A1**
(43) Date of publication of application: **26.11.2025**
(21) Application number: 24863065.9
(22) Date of filing: 16.08.2024
(51) Int. Cl.: G01N 27/22, G01N 1/22, B03C 1/02, B08B 1/10

(54) **METAL FOREIGN SUBSTANCE INSPECTION DEVICE AND METAL FOREIGN SUBSTANCE INSPECTION METHOD**

(30) Priority: 08.09.2023 KR 20230119529
(71) Applicant: LG Energy Solution, Ltd., Seoul 07335 (KR)
(72) Inventor: LEE, Boram, Daejeon 34122 (KR)
(74) Representative: Goddar, Heinz J.
(86) International application number: PCT/KR2024/012202
(87) International publication number: WO 2025/053484

(57) **Abstract**

A metal foreign matter inspection device according to an embodiment of the present disclosure includes: a housing unit into which air containing a metal foreign matter flow; an electrode unit which contacts the metal foreign matter contained in the air having flowed in the housing unit and acquires information about the metal foreign matter; and a fan unit which blows air in one direction toward the metal foreign matter located on the electrode unit, wherein the housing unit comprises an air storage unit which stores air containing the metal foreign matter and an air inflow unit located at an upper part of the housing unit, and wherein the electrode unit may be located at a lower part of the housing unit, and the fan unit may be located on one side face of the housing unit.

## Description

### [TECHNICAL FIELD]

### Cross Citation with Related Application(s)

This application claims the benefit of Korean Patent Application No. 10-2023-0119529 filed on September 8, 2023 with the Korean Intellectual Property Office, the disclosure of which is incorporated herein by reference in its entirety.

The present disclosure relates to a metal foreign matter inspection device and a metal foreign inspection method, and more particularly, to a metal foreign matter inspection device and a metal foreign inspection method, which detect metal foreign matter contained in the air on a production line and distinguish the type of metal foreign matter.

### [BACKGROUND]

As technical developments and demands on mobile devices are increasing, demands on secondary batteries as an energy source is being rapidly increasing. In particular, a secondary battery has attracted considerable attention as an energy source for power-driven devices, such as an electric bicycle, an electric vehicle, and a hybrid electric vehicle, as well as an energy source for mobile devices, such as a mobile phone, a digital camera, a laptop computer and a wearable device.

Based on the shape of a battery case, a secondary battery may be classified into a cylindrical battery having an electrode assembly mounted in a cylindrical metal container, a prismatic battery having an electrode assembly mounted in a prismatic metal container, or a pouch-type battery having an electrode assembly mounted in a pouch-shaped case made of an aluminum laminate sheet. Here, the electrode assembly mounted in the battery case serves as a power generating element capable of charging/discharging and including a stacked structure of a cathode, an anode and a separator interposed between the cathode and the anode. The electrode assembly may be classified into jelly-roll types formed by interposing a separator between a long sheet type cathode and a long sheet type anode and winding them, and stacked types formed by sequentially stacking a plurality of cathodes and anodes with separators being interposed between the cathode and the anode.

Among these, particularly, the usage of a pouch-shaped battery configured to have a structure in which such a stacked type or stacked/folded type electrode assembly is mounted in a pouch-shaped battery case made of an aluminum laminate sheet has gradually increased because of low manufacturing costs, light weight, easy modification in shape, etc.

In a production line for manufacturing such secondary batteries, there is a problem that metal foreign matter contained in the air can increase the defect rate of the secondary batteries. In particular, as the type of metal foreign matter contained in the air is selectively detected in the production line, monitoring such as grasping a cause of metal foreign matter generation is required.

Conventionally, a metal foreign matter contained in the air was penetrated into oil through a suction means such as an air pump, and then the oil penetrated with the metal foreign matter was circulated to detect the metal foreign matter. However, this method has problems such as the oil being contaminated by foreign matter such as metal foreign matter, or the oil being evaporated over time. In this case, it is necessary to replace the oil or fill the oil to a fixed quantity level.

Accordingly, there is an increasing need to develop a metal foreign matter inspection device and a metal foreign matter inspection method, which can detect metal foreign matter contained in the air on the production line and distinguish the type of metal foreign matter in dried state where internal oil is omitted.

### [DETAILED DESCRIPTION OF THE INVENTION]

### [Technical Problem]

The present disclosure is designed to solve the above-mentioned problems, and therefore an object of the present disclosure is to provide a metal foreign matter inspection device and a metal foreign inspection method, which detect metal foreign matter contained in the air on a production line and distinguish the type of metal foreign matter.

However, the objects of the present disclosure are not limited to the aforementioned objects, and other objects which are not mentioned herein should be clearly understood by those skilled in the art from the following detailed description and the accompanying drawing.

### [Technical Solution]

According to an embodiment of the present disclosure, there is provided a metal foreign matter inspection device comprising: a housing unit into which air containing a metal foreign matter flow; an electrode unit which contacts the metal foreign matter contained in the air having flowed in the housing unit and acquires information about the metal foreign matter; and a fan unit which blows air in one direction toward the metal foreign matter located on the electrode unit, wherein the housing unit comprises an air storage unit which stores air containing the metal foreign matter and an air inflow unit located at an upper part of the housing unit, and wherein the electrode unit is located at a lower part of the housing unit, and the fan unit is located on one side face of the housing unit.

The presence or absence of the metal foreign matter and the size of the metal foreign matter may be analyzed based on the information about the capacitance value according to time acquired by the electrode unit.

Air containing metal foreign matter having flowed in the air inflow unit moves along the direction of gravity in the air storage unit, the metal foreign matter moving along the direction of gravity in the air storage unit is accumulated in the electrode unit, and the presence or absence of the metal foreign matter and the size of the metal foreign matter may be analyzed based on the difference in capacitance value during the time of accumulation of the metal foreign matter.

The fan unit repeats the advancing and stopping of the blowing at regular time intervals, and the inspection device may analyze the metal foreign matter based on the information acquired by the electrode unit in a state where blowing of the fan unit is stopped.

The metal foreign matter inspection device further comprises a metal foreign matter collecting unit located apart from the fan unit along the blowing direction of the fan unit, and located on the opposite side of one side face of the housing unit where the fan unit is located. wherein at least a part of the metal foreign matter located on the electrode unit may move to the metal foreign matter collecting unit along the blowing direction of the fan unit.

The metal foreign matter inspection device further comprises a magnet unit located at the lower part of the electrode unit, wherein a ferrous metal foreign matter containing iron(Fe) among the metal foreign matter located on the electrode unit may be fixed onto the electrode unit by the magnetic force of the magnet unit.

The ferrous metal foreign matter fixed onto the electrode unit may be removed by a cloth or brush that wipes the surface of the electrode unit.

A non-ferrous metal foreign matter not containing iron(Fe) among the metal foreign matter located on the electrode unit may be moved to the metal foreign matter collecting unit by the blowing of the fan unit.

The non-ferrous metal foreign matter collected in the metal foreign matter collecting unit may be removed as the metal foreign matter collecting unit is replaced with another metal foreign matter collecting unit.

According to another embodiment of the present disclosure, there is provided a metal foreign matter inspection method, comprising: an air inflow step of allowing air containing a metal foreign matter to flow into a housing unit; a metal foreign matter information acquisition step of bring the metal foreign matter contained in the air having flowed in the housing unit into contact with an electrode unit to acquire information about the metal foreign matter; and a metal foreign matter movement step of blowing air in one direction toward the metal foreign matter located on the electrode unit through a fan unit, wherein the housing unit includes an air storage unit which stores air containing a metal foreign matter and an air inflow unit located at an upper part of the housing unit, and wherein the electrode unit is located at a lower part of the housing unit, and the fan unit is located at one side face of the housing unit.

The metal foreign matter inspection method may further comprise a metal foreign matter analysis step of analyzing the presence or absence of the metal foreign matter and the size of the metal foreign matter based on information about the capacitance value according to time acquired by the electrode unit.

The metal foreign matter moves along the direction of gravity from the air inflow unit and the metal foreign matter that has moved along the direction of gravity is accumulated on the electrode unit, and the metal foreign matter analysis step may analyze the size of the metal foreign matter based on the difference in capacitance values during the time of accumulation of the metal foreign matter.

The fan unit in the metal foreign matter movement step may repeat the advancing and stopping of the blowing at regular time intervals, and the metal foreign matter information acquisition step and the metal foreign matter analysis step may be performed in a state where blowing of the fan unit is stopped.

In the metal foreign matter inspection method, a magnet unit located at the lower part of the electrode unit is further comprised, wherein a ferrous metal foreign matter containing iron(Fe) among the metal foreign matter located on the electrode unit is fixed onto the electrode unit by the magnetic force of the magnet unit, and after the metal foreign matter movement step, the ferrous metal foreign matter may be fixed onto the electrode unit.

The metal foreign matter inspection method may further comprise a metal foreign matter collection step of allowing at least a part of the metal foreign matter located on the electrode unit to move along the blowing direction of the fan unit, thereby being collected by the metal foreign matter collecting unit, wherein the metal foreign matter collecting unit is located apart from the fan unit along the blowing direction of the fan unit, and is located on the opposite side of one side face of the housing unit where the fan unit is located.

### [Advantageous Effects]

A metal foreign matter inspection device and a metal foreign inspection method according to embodiments of the present disclosure can detect metal foreign matter contained in the air on a production line and distinguish the type of metal foreign matter, based on metal foreign matter information acquired by bringing the metal foreign matter contained in the air having flowed in from the air inflow unit into contact with the electrode unit.

Effects obtainable from the present disclosure are not limited to the effects mentioned above, and additional other effects not mentioned herein will be clearly understood from the detailed description and the accompanying drawings by those skilled in the art.

### [BRIEF DESCRIPTION OF THE DRAWINGS]

FIG. 1 is a diagram illustrating a metal foreign matter inspection device according to an embodiment of the present disclosure.
FIG. 2 is a diagram illustrating the blowing strength of the fan unit of FIG. 1 over time.
FIG. 3 is a diagram illustrating metal foreign matter that sequentially accumulates in the metal foreign matter inspection device of FIG. 1.
FIGS. 4 to 6 are diagrams illustrating changes in capacitance values generated as the metal foreign matter of FIG. 3 sequentially accumulates over time.
FIGS. 7 to 9 are diagrams illustrating changes in capacitance values generated as the metal foreign matter of FIG. 3 sequentially accumulates according to position.
FIG. 10 is a diagram illustrating that a part of the metal foreign matter of FIG. 3 is moved by the blowing of the fan unit.
FIG. 11 is a diagram illustrating a metal foreign matter inspection method according to another embodiment of the present disclosure.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, throughout the description, when a portion is referred to as "including" or "comprising" a certain component, it means that the portion can further include other components, without excluding the other components, unless otherwise stated.

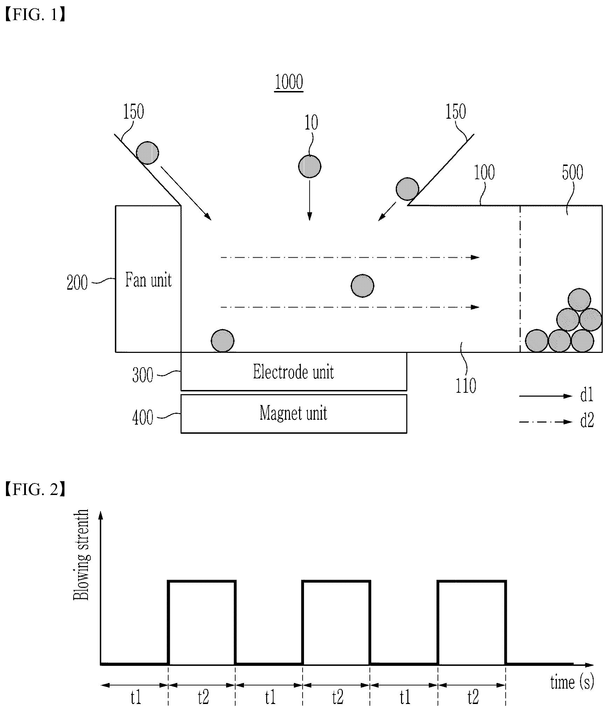

FIG. 1 is a diagram illustrating a metal foreign matter inspection device according to an embodiment of the present disclosure. FIG. 2 is a diagram illustrating the blowing strength of the fan unit of FIG. 1 over time.

Referring to FIG. 1, a metal foreign matter inspection device 1000 comprises: a housing unit 100 into which air containing a metal foreign matter 10 flow; an electrode unit 300 which contacts the metal foreign matter 10 contained in the air having flowed in the housing unit 100 and acquires information about the metal foreign matter 10; and a fan unit 200 which blows air in one direction toward the metal foreign matter 10 located on the electrode unit 300.

More specifically, the housing unit 100 may comprise an air storage unit 110 which stores air containing a metal foreign matter 10 and an air inflow unit 150 into which air containing metal foreign matter 10 flows. Here, the housing unit 100 may not allow additional inspection fluids such as oil, water, etc. to flow in the inside of the air storage unit 110. That is, the housing unit 100 is configured such that the inside of the air storage unit 110 may be in a dried state, and only air containing metal foreign matter 10 flowed in through the air inflow unit 150 may flow in the inside of the air storage unit 110.

Accordingly, the metal foreign matter inspection device 1000 according to the present embodiment has the advantage that a separate inspection fluid does not flow in the inside of the air storage unit 110 and thus, there is no need to replace or replenish the inspection fluid during the inspection process. In addition, as the inspection progresses while the inside of the air storage unit 110 is in a dried state, it is possible to prevent a problem in which the inspection fluid is contaminated by the metal foreign matter 10 contained in the air and the inspection performance is deteriorated. In addition, since the inspection is advanced in a state where the inside of the air storage unit 110 is dried, it is possible to prevent the problem of the inspection performance being deteriorated due to the contamination of the inspection fluid caused by the metal foreign matter 10 contained in the air.

In the housing unit 100, the air inflow unit 150 may be located at the upper part of the housing unit 100. As an example, as shown in FIG. 1, the air inflow unit 150 may have a guide structure in which the upper part of the housing unit 100 may be open toward the outside, and may extend from the upper part of the housing unit 100 toward the outside. External air flowing in through the air inflow unit 150 located at the upper part of the housing unit 100 may move along the first direction d1 in the inside of the air storage unit 110. As an example, the first direction d1 may mean the direction of gravity, and the direction of gravity may mean the direction from the upper part of the housing unit 100 toward the lower part of the housing unit 100.

The fan unit 200 may be located on one side face of the housing unit 100. More specifically, the fan unit 200 may be located on one side face of the air storage unit 110. Here, the fan unit 200 may blow air in a second direction d2 from one side face of the air storage unit 110 toward the other side face. Here, the second direction d2, which is the blowing direction of the fan unit 200, may be a direction from one side face of the air storage unit 110 toward the other side face on the basis of the bottom surface of the air storage unit 110, as shown in FIG. 1.

Accordingly, in the metal foreign matter inspection device 1000 according to the present embodiment, air containing the metal foreign matter 10 having flowing in the air storage unit 110 may move along the blowing direction of the fan unit 200.

The electrode unit 300 may be located at the lower part of the housing unit 100. More specifically, in a lower part of the housing unit 100, the electrode unit 300 may be located between a fan unit 200 and a metal foreign matter collecting unit 500. As an example, the electrode unit 300 may be located on the same vertical line as the air inflow unit 110 as in FIG. 1. In other words, in a lower part of the housing unit 100, the electrode unit 300 may be formed at a position spaced apart from the air inflow unit 110 in the direction of gravity. However, the position of the electrode unit 300 is not limited to those shown in FIG. 1, and can be included in this embodiment as long as it is located within a path where the air flowed in through the air inflow unit 110 flows along the blowing direction of the fan unit 200.

Accordingly, in the metal foreign matter inspection device 1000 according to the present embodiment, the metal foreign matter 10 contained in the air moving along the direction of gravity in the inside of the air storage unit 110 can be easily accumulated on the electrode unit 300, and inspection of the metal foreign matter accumulated on the electrode unit 300 can be easily advanced.

The metal foreign matter inspection device 1000 according to the present embodiment may include a metal foreign matter collecting unit 500 located apart from the fan unit 200 along the blowing direction of the fan unit 200. In other words, in the housing unit 100, the metal foreign matter collecting unit 500 may be located on the opposite side of one side face of the housing unit 100 where the fan unit 200 is located. That is, in the housing unit 100, the metal foreign matter collecting unit 500 may be located on the opposite side of one side face of the air storage unit 110 where the fan unit 200 is located. That is, when air blows along the second direction d2 from the fan unit 200, at least a part of the metal foreign matter 10 located on the electrode unit 300 may move to the metal foreign matter collecting unit 500 along the blowing direction of the fan unit 200.

Accordingly, in the metal foreign matter inspection device 1000 according to the present embodiment, the metal foreign matter 10 that has undergone metal foreign matter inspection on the electrode unit 300 can be collected in the metal foreign matter collecting unit 500 along the blowing direction of the fan unit 200, thereby preventing excessive accumulation of the metal foreign matter 10 on the electrode unit 300, and making it easier to inspect the metal foreign matter 10 accumulated on the electrode unit 300.

The metal foreign matter inspection device 1000 according to the present embodiment may further include a magnet unit 400 located at a lower part of the electrode unit 300. More specifically, in a lower part of the electrode unit 300, the magnet unit 400 may be located between the electrode unit 300 and the metal foreign matter collecting unit 500. As an example, in the lower part of the electrode unit 300, the magnet unit 400 may be located on the same vertical line as the electrode unit 300 as shown in FIG. 1. In other words, in the lower part of the electrode unit 300, the magnet unit 400 may be formed at a position spaced apart from the electrode unit 300 in the direction of gravity. However, the position of the magnet unit 400 is not limited to those shown in FIG. 1, and can be included in the present embodiment as long as the metal foreign matter accumulated in the electrode unit 300 is located within a path flowing along the blowing direction of the fan unit 200.

More specifically, the magnet unit 400 can fix onto the electrode unit 300 a ferrous metal foreign matter containing iron(Fe) among the metal foreign matter 10 located on the electrode unit 300. Unlike the same, the magnet unit 400 may not allow a non-ferrous metal foreign matter containing iron(Fe) located on the electrode unit 300 to fixed onto the electrode unit 300. In other words, the non-ferrous metal foreign matter containing iron(Fe) among the metal foreign matter 10 located on the electrode unit 300 can be moved to the metal foreign matter collecting unit 500 by the blowing of the fan unit 200.

That is, the magnet unit 400 can be made of a magnetic material having a magnetic force sufficient to fix the ferrous metal foreign matter containing iron(Fe) onto the electrode unit 300 even by the blowing of the fan unit 200.

Accordingly, in the metal foreign matter inspection device 1000 according to the present embodiment, the metal foreign matter 10 that has undergone metal foreign matter inspection on the electrode unit 300 can be fixed onto the electrode unit 300 or collected in the metal foreign matter collecting unit 500 depending on the type of the metal foreign matter 10 if the blowing of the fan unit 200 advances, so that the type of the metal foreign matter 10 can be easily detected based on whether or not the metal foreign matter 10 on the electrode unit 300 contains iron(Fe).

As an example, ferrous(Fe) metal foreign matter fixed onto the electrode unit 300 can be removed by a cloth or brush that wipes the surface of the electrode unit 300. Also, non-ferrous metal foreign matter not containing iron(Fe) collected in the metal foreign matter collecting unit 500 by the blowing of the fan unit 200 can be removed by replacing the metal foreign matter collecting unit 500 with another metal foreign matter collecting unit.

Accordingly, in the metal foreign matter inspection device 1000 according to the present embodiment, ferrous metal foreign matter accumulated on the electrode unit 300 or non-ferrous metal foreign matter collected in the metal foreign matter collecting unit 500 can be removed relatively easily in a dried state.

Referring to FIG. 2, the fan unit 200 can repeat the advancing and stopping of the blowing at regular time intervals. More specifically, the fan unit 200 can perform the advancing and stopping of the blowing in a form where the first time t1 when the blowing is stopped and the second time t2 when the blowing advances intersect. Here, the first time t1 and the second time t2 may be equal to each other, but the corresponding time may be appropriately adjusted as needed. Furthermore, the fan unit 200 may have the same blowing strength at each second time t2 as shown in FIG. 2, but the corresponding strength may be appropriately adjusted as needed.

The first time t1 when the blowing is stopped may be the time when the air flowed in through the air inflow unit 150 moves into the air storage unit 110 and the time when the metal foreign matter contained in the air accumulates on the electrode unit 300. Also, the first time t1 when the blowing is stopped may include the time required for acquiring information about the metal foreign matter accumulated on the electrode unit 300. That is, the metal foreign matter inspection device 1000 according to the present embodiment may analyze the metal foreign matter based on the information acquired by the electrode unit 300 at the first time t1 when the blowing of the fan unit 200 is stopped.

The second time t2 during which the blowing advances may be the time1 required for removing a part of the metal foreign matter accumulated on the electrode unit 300. In other words, the second time t2 during which the blowing advances may be the time required for distinguishing the types of metal foreign matter accumulated on the electrode unit 300. As an example, as described below, among the metal foreign matter accumulated on the electrode unit 300, ferrous metal foreign matter may be fixed to the electrode unit 300 during the second time t2, and non-ferrous metal foreign matter may move to the metal foreign matter collecting unit 500 during the second time t2.

Accordingly, in the metal foreign matter inspection device 1000 according to the present embodiment, the air having flowed in the air inflow unit 150 is not blown immediately by the fan unit 200, but can ensure the time during the air having flowed in the air inflow unit 150 can be sufficient contact with the electrode unit 300. That is, it is possible to sufficiently ensure the time required for obtaining information about the metal foreign matter 10 on the electrode unit 300, thereby further improving the inspection performance for the metal foreign matter 10 contained in the air.

In addition, in the metal foreign matter inspection device 1000 according to the present embodiment, as the stopping and progressing of the blowing are repeated at regular intervals, there is an advantage of preventing excessive accumulation of the metal foreign matter 10 on the electrode unit 300 and also being able to distinguish the type of the metal foreign matter 10.

Moreover, although not shown in FIG. 1, the metal foreign matter inspection device 1000 according to the present embodiment may include a control unit (not shown) that can control the fan unit 200 and the electrode unit 300. Here, the control unit may include one or more of a CPU (Central Processing Unit), a RAM (Random Access Memory), a GPU (Graphics Processing Unit), one or more microprocessors, and other electronic components capable of processing input data according to predetermined logic. As an example, the control unit (not shown) may develop the metal foreign matter inspection process of the metal foreign matter inspection device 1000 on the RAM, and control the blowing time, speed, strength, etc. of the fan unit 200 according to the developed program, or perform various processing such as storing and analyzing the metal foreign matter information acquired by the electrode unit 300.

The metal foreign matter analysis through the electrode unit 300 will be described in more detail below.

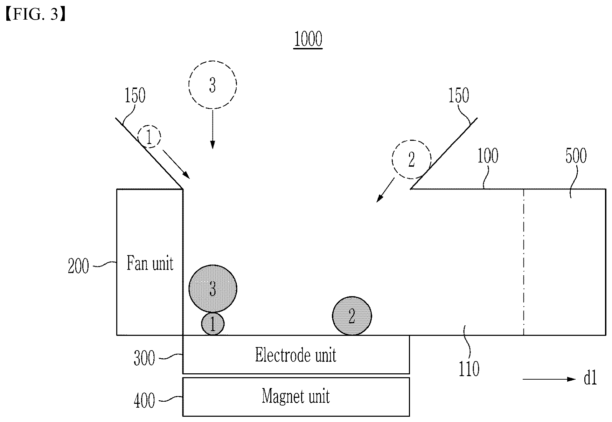

FIG. 3 is a diagram illustrating metal foreign matter that sequentially accumulates in the metal foreign matter inspection device of FIG. 1.

Referring to FIGS. 1 and 3, the metal foreign matter inspection device 1000 according to the present embodiment can analyze the presence or absence of a metal foreign matter and the size of the metal foreign matter based on information about the capacitance value over time acquired by the electrode unit 300. More specifically, air containing metal foreign matter 10 having flowed in the air inflow unit 150 moves along the direction of gravity in the air storage unit 110, the metal foreign matter 10 moving along the direction of gravity in the inside of the air storage unit 110 is accumulated on the electrode unit 300, and the presence or absence of the metal foreign matter and the size of the metal foreign matter can be analyzed based on the difference in capacitance values during the time of accumulation of the metal foreign matter 10.

The electrode unit 300 may include at least one capacitance sensor and a signal processing circuit that processes an electrical signal acquired by the capacitance sensor. Here, the capacitance sensor may be a sensor that measures capacitance by applying an AC power between a cathode and an anode.

As an example, the capacitance sensor contained in the electrode unit 300 may be a capacitance sensor with a single electrode structure including one cathode and one anode. As another example, the capacitance sensor contained in the electrode unit 300 may be a capacitance sensor with a matrix structure including multiple cathodes and multiple anodes.

Accordingly, in the metal foreign matter inspection device 1000 according to the present embodiment, if the capacitance sensor contained in the electrode unit 300 has a single electrode structure, information on the sequential accumulation of capacitance values over time can be obtained. In addition, if the capacitance sensor contained in the electrode unit 300 has a matrix structure, information on the accumulation of capacitance values according to the position where the metal foreign matter is accumulated on the electrode unit 300 can be obtained.

As an example, as shown in FIG. 3, the metal foreign matter 10 may include a first metal foreign matter 1, a second metal foreign matter 2, and a third metal foreign matter having different sizes. Here, the relative sizes and inflow order of the first metal foreign matter 1, the second metal foreign matter 2, and the third metal foreign matter 3 are illustrated by the diameter size and number of the circles as shown in FIG. 3. That is, as shown in FIG. 3, the metal foreign matter 10 is accumulated on the electrode unit 300 in the order of the first metal foreign matter 1, the second metal foreign matter 2, and the third metal foreign matter 3, and has a relatively large size in the order of the first metal foreign matter 1, the second metal foreign matter 2 and the third metal foreign matter 3.

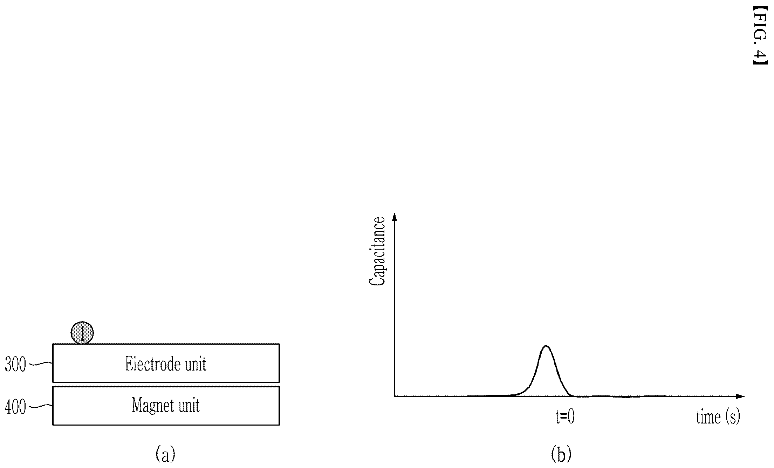

FIGS. 4 to 6 are diagrams illustrating changes in capacitance values generated as the metal foreign matter of FIG. 3 sequentially accumulates over time. Here, the electrode unit 300 of FIGS. 4 to 6 includes a capacitance sensor which has a single electrode structure.

More specifically, as shown in FIG. 3 and FIG. 4(a), the first metal foreign matter 1 can be accumulated on the electrode unit 300. At this time, the electrode unit 300 can acquire information on the change of the value of the capacitance as shown in FIG. 4(b). In addition, the time when the first metal foreign matter 1 is detected can be explained as t=0.

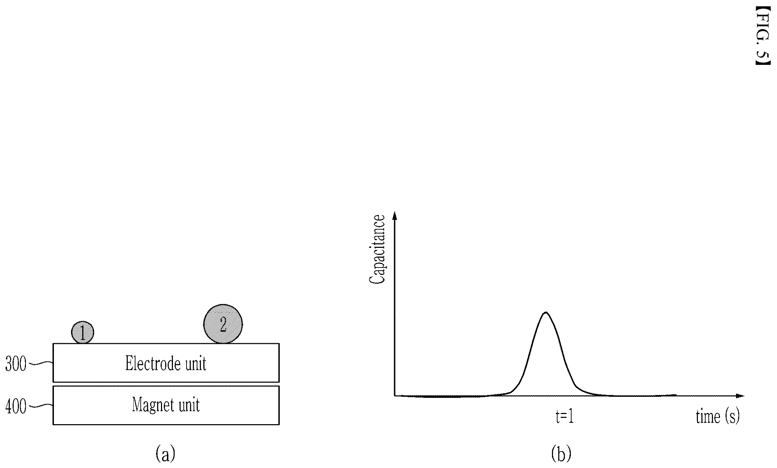

Further, as shown in FIG. 3 and FIG. 5(a), the second metal foreign matter 2 may be accumulated on the electrode unit 300 where the first metal foreign matter 1 is accumulated. At this time, the electrode unit 300 may acquire information on the change of the value of capacitance as shown in FIG. 5(b) from the result of FIG. 4(b). Further, the time when both the first metal foreign matter 1 and the second metal foreign matter 2 are detected is t=1s, which may be explained as the time that 1 second has elapsed from the time when the first metal foreign matter 1 is detected. However, this time interval is only illustrative, and the change in capacitance values may be acquired at various time intervals as needed.

Here, when comparing FIG. 4(b) where the first metal foreign matter 1 is detected and FIG. 5(b) where the first metal foreign matter 1 and the second metal foreign matter 2 are detected, it can be confirmed that peaks generate at the same position and that the intensities of the peaks vary. It can be confirmed that the capacitance values of the peaks generated by the first metal foreign matter 1 and the second metal foreign matter 2 in FIG. 5(b) are larger than those of the peaks generated by the first metal foreign matter 1 in FIG. 4(b). Here, through a comparison between the capacitance value shown in the peak of FIG. 5(b) and the capacitance value shown in the peak of FIG. 4(b), it is possible to confirm the difference in relative size between the first metal foreign matter 1 and the second metal foreign matter 2.

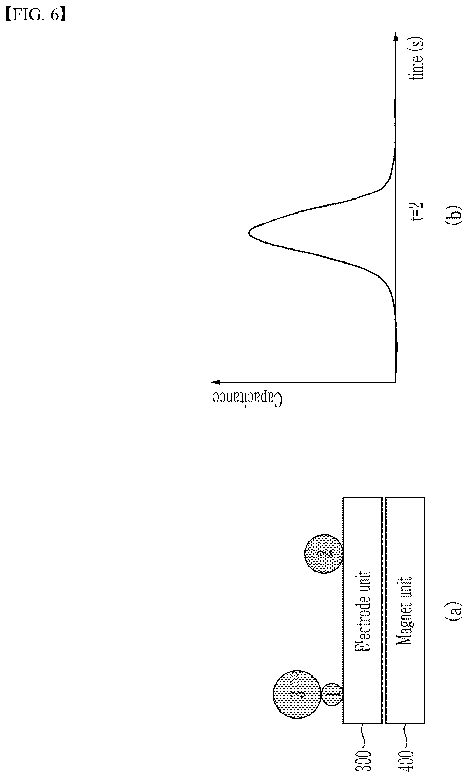

Further, as shown in FIG. 3 and FIG. 6(a), the third metal foreign matter 3 can be accumulated on the electrode unit 300 where the first metal foreign matter 1 and the second metal foreign matter 2 are accumulated. At this time, the electrode unit 300 can acquire information on the change in the value of capacitance shown in FIG. 6(b) from the result of FIG. 5(b). In addition, the time when the first metal foreign matter 1 to the third metal foreign matter 3 are all detected is t=2s, which can be explained as the time that 1 second has elapsed from the time when the first metal foreign matter 1 and the second metal foreign matter 2 are detected. However, this time interval is only illustrative, and the change in capacitance value can be acquired at various time intervals as needed.

Here, when comparing FIG. 5(b) where the first metal foreign matter 1 and the second metal foreign matter 2 are detected and FIG. 6(b) where the first metal foreign matter 1 and third metal foreign matter 3 are detected, it can be confirmed that as the first metal foreign matter 1, the second metal foreign matter 2 and the third metal foreign matter 3 are accumulated, the intensity of the peak becomes greater. In addition, through a comparison between the capacitance values of the peaks generated by the first metal foreign matter 1 and the second metal foreign matter 2 in FIG. 5(b) and the capacitance values of the peaks generated by the third metal foreign matter 3 in FIG. 6(b), it can be confirmed that the size of the third metal foreign matter 3 has the difference in relative size between the first metal foreign matter 1 and the second metal foreign matter 2.

Accordingly, the metal foreign matter inspection device 1000 according to the present embodiment can confirm the presence or absence of the metal foreign matter 10, the inflow order, and the relative size difference of the metal foreign matter 10 while the metal foreign matter 10 is fixed to the electrode part 300 by comparing the size of the capacitance value accumulated over time in the electrode unit 300 and the position of the peak, thereby further improving the accuracy of the inspection performance for the metal foreign matter.

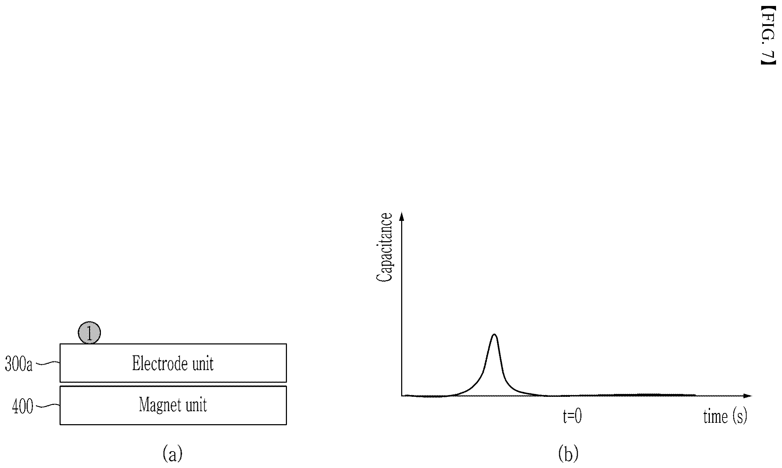

FIGS. 7 to 9 are diagrams illustrating changes in capacitance values generated as the metal foreign matter of FIG. 3 sequentially accumulates according to position. Here, the electrode unit 300a of FIG. 7 includes a capacitance sensor having a matrix structure, unlike the electrode unit 300 of FIGS. 4 to 6.

Although most of the contents are the same as those described in FIGS. 4 to 6, only the contents that are different due to the inclusion the electrode unit 300a instead of the electrode unit 300 of FIGS. 4 to 6 will be described below.

Referring to FIG. 3 and FIG. 7(a), the first metal foreign matter 1 can be accumulated on the electrode unit 300a. At this time, the electrode unit 300a can acquire information on the change in the value of capacitance as shown in FIG. 7(b). In addition, the time when the first metal foreign matter 1 is detected can be explained as t=0.

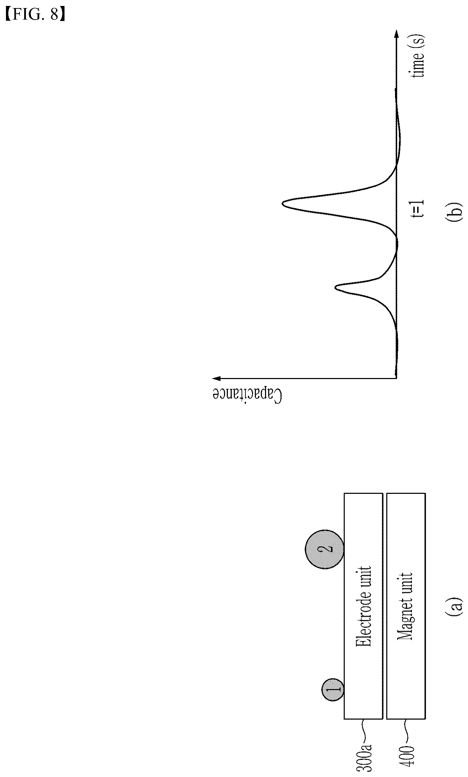

Further, as shown in FIG. 3 and FIG. 8(a), the second metal foreign matter 2 can be accumulated on the electrode unit 300a where the first metal foreign matter 1 is accumulated. At this time, the electrode unit 300a can acquire information on the change in the value of capacitance as shown in FIG. 8(b) from the result of FIG. 7(b). In addition, the time when both the first metal foreign matter 1 and the second metal foreign matter 2 are detected is t=1s, which can be explained as the time that 1 second has elapsed from the time when the first metal foreign matter 1 is detected. However, this time interval is only illustrative, and the change in the capacitance value can be acquired at various time intervals as needed.

Here, when comparing FIG. 7(b) where the first metal foreign matter 1 is detected and FIG. 8(b) where the first metal foreign matter 1 and the second metal foreign matter 2 are detected, it can be confirmed that, considering that peaks are generated at different positions, the first metal foreign matter 1 and the second metal foreign matter 2 are accumulated at different positions on the electrode unit 300a.

In addition, considering that the capacitance value of the peak where the second metal foreign matter 2 is located is relatively larger than the capacitance value of the peak where the first metal foreign matter 1 is located, it can be confirmed that the size of the second metal foreign matter 2 is larger than that of the first metal foreign matter 1. That is, the difference in relative size of the metal foreign matter 10 can be confirmed through a comparison of the sizes of the capacitance values detected by the electrode unit 300a.

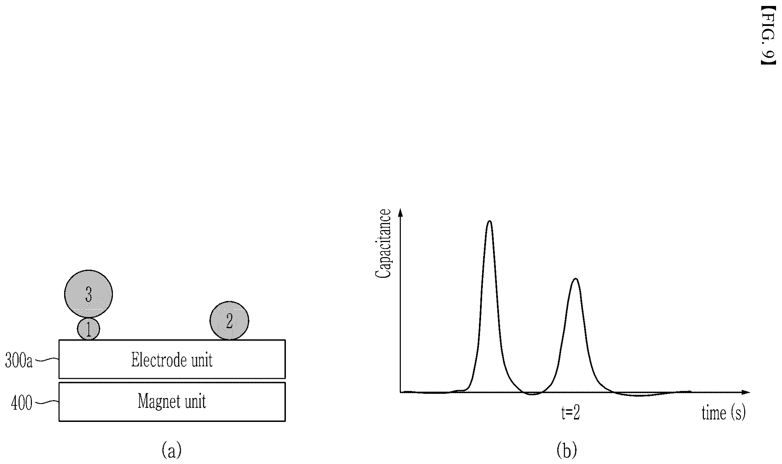

Further, as shown in FIG. 3 and FIG. 9(a), the third metal foreign matter 3 can be accumulated on the electrode unit 300a where the first metal foreign matter 1 and the second metal foreign matter 2 are accumulated. At this time, the electrode unit 300a can acquire information on the change in the value of capacitance as shown in FIG. 9(b) from the result of FIG. 8(b).

Here, when comparing FIG. 8(b) where the first metal foreign matter 1 and the second metal foreign matter 2 are detected with FIG. 9(b) where the first metal foreign matter 1 to the third metal foreign matter 3 are detected, it can be confirmed that the intensity of the peak where the first metal foreign matter 1 and the first metal foreign matter 1 are located becomes greater. That is, it can be confirmed that the third metal foreign matter 3 is accumulated at the same position on the electrode unit 300a as the first metal foreign matter 1.

Also, through a comparison between the capacitance values of the peaks generated by the first metal foreign matter 1 and the second metal foreign matter 2 in FIG. 8(b) and the capacitance values of the peaks generated by the third metal foreign matter 3 in Fig. 9(b), it can be confirmed that the size of the third metal foreign matter 3 is larger than that of the first metal foreign matter 1. Furthermore, through a comparison between the capacitance values that relatively increased as the third metal foreign matter 3 accumulated at the same position as the first metal foreign matter 1 and the capacitance values of the peaks generated by the second metal foreign matter, it is possible to confirm the difference in relative size between the second metal foreign matter 2 and the third metal foreign matter 3.

Accordingly, the metal foreign matter inspection device 1000 according to the present embodiment can confirm the presence or absence of the metal foreign matter 10, the cumulation position thereof, and the relative size difference of the metal foreign matter 10 in a state where the metal foreign matter 10 is fixed to the electrode part 300a by comparing the size of the capacitance value acquired according to the accumulation position and the position of the peak in the electrode unit 300a, thereby further improving the accuracy of the inspection performance for the metal foreign matter.

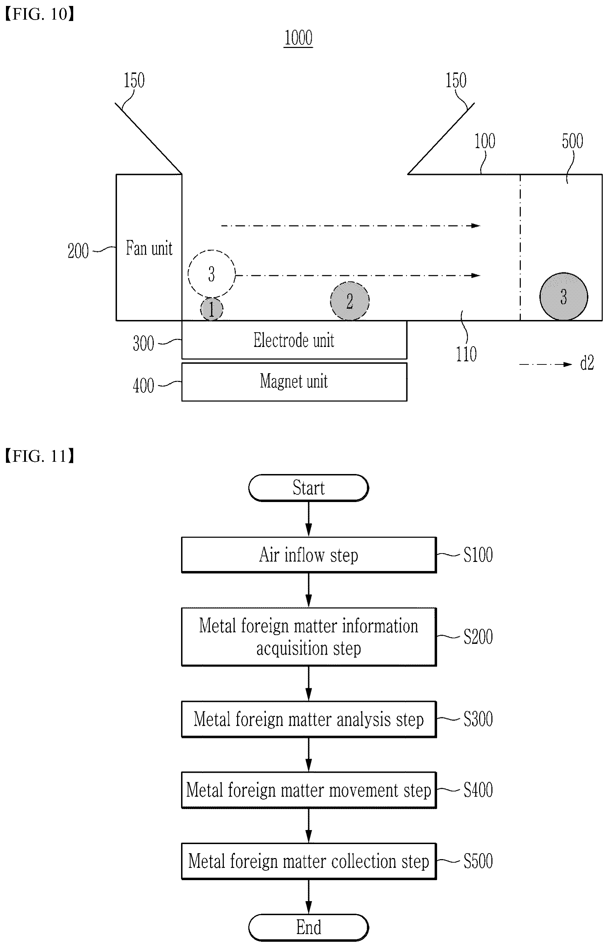

FIG. 10 is a diagram illustrating that a part of the metal foreign matter of FIG. 3 is moved by the blowing of the fan unit.

Referring to FIG. 10, after inspection of the presence or absence and size of metal foreign matter in the electrode unit 300 as in FIGS. 4 to 6 or the electrode unit 300a as in FIGS. 7 to 9 is performed, the blowing may be advanced from the fan unit 200. As an example, as shown in FIG. 8, the first metal foreign matter 1 and the second metal foreign matter 2 may be fixed onto the electrode unit 300 even when air is blown from the fan unit 200, and the third metal foreign matter 3 may move to the metal foreign matter collecting unit 500. That is, it can be confirmed that the first metal foreign matter 1 and the second metal foreign matter 2 are ferrous metal foreign matters containing iron(Fe), and that the third metal foreign matter 3 is a non-ferrous metal foreign matter not containing iron(Fe).

Accordingly, the metal foreign matter inspection device 1000 according to the present embodiment has the advantage of being able to further grasp the cause of occurrence of the metal foreign matter 10, in that it is possible to distinguish the type of metal foreign matter according to whether the metal foreign matter 10 contains iron, along with the presence or absence of the metal foreign matter 10 as shown in FIG. 8.

FIG. 11 is a diagram illustrating a metal foreign matter inspection method according to another embodiment of the present disclosure.

Referring to FIGS. 1 and 11, a metal foreign matter inspection method according to another embodiment of the present disclosure is a method using the above-mentioned metal foreign matter inspection device 1000, and comprises an air inflow step (S100) of allowing air containing a metal foreign matter to flow into a housing unit 100; a metal foreign matter information acquisition step (S200) of bringing the metal foreign matter 10 contained in the air having flowed in the housing unit 100 into contact with an electrode unit 300 to acquire information about the metal foreign matter; a metal foreign matter analysis step (S300) of analyzing the presence or absence of the metal foreign matter and the size of the metal foreign matter based on information about the capacitance value over time acquired by the electrode unit 300; and a metal foreign matter movement step (S400) of blowing air in one direction toward the metal foreign matter 10 located on the electrode unit 300 through a fan unit 200. Here, the housing unit 100 includes an air storage unit 110 which stores air containing a metal foreign matter 10 and an air inflow unit 150 located at an upper part of the housing unit 100, and the electrode unit 300 is located at a lower part of the housing unit 100, and the fan unit 200 is located at one side face of the housing unit 100.

As described above in FIGS. 1 to 10, in the metal foreign matter inspection method according to the present embodiment, the metal foreign matter 10 moves along the direction of gravity from the air inflow unit 150, and the metal foreign matter 10 that has moved along the direction of gravity is accumulated on the electrode unit 300, wherein the metal foreign matter analysis step (S300) may analyze the size of the metal foreign matter 10 based on the difference in capacitance values during the time of accumulation of the metal foreign matter 10.

In the metal foreign matter inspection method according to the present embodiment, the fan unit 200 in the metal foreign matter movement step (S400) repeats the advancing and stopping of the blowing at regular time intervals, and the metal foreign matter information acquisition step (S200) and the metal foreign matter analysis step (S300) may be performed in a state where blowing of the fan unit 200 is stopped.

In the metal foreign matter inspection method according to the present embodiment, a magnet unit 400 located at the lower part of the electrode unit is further comprised, wherein a ferrous metal foreign matter containing iron(Fe) among the metal foreign matter located on the electrode unit 300 is fixed onto the electrode unit 300 by the magnetic force of the magnet unit 400, and after the metal foreign matter movement step (S400), the ferrous metal foreign matter is fixed onto the electrode unit 300.

The metal foreign matter inspection method according to the present embodiment further comprises a metal foreign matter collection step (S500) of allowing at least a part of the metal foreign matter located on the electrode unit 300 to move along the blowing direction of the fan unit 200, thereby being collected by the metal foreign matter collecting unit 500, wherein the metal foreign matter collecting unit 500 is located apart from the fan unit along the blowing direction of the fan unit 200, and may be located on the opposite side of one side face of the housing unit 100 where the fan unit 200 is located.

Accordingly, the metal foreign matter inspection method according to the present embodiment can perform a comparison of the size of the capacitance value accumulated over time included in the metal foreign matter information in the metal foreign matter analysis step (S300) based on the metal foreign matter information acquired by the electrode unit 300 in the metal foreign matter information acquisition step (S200). At this time, the metal foreign matter information is acquired in a state where the metal foreign matter 10 is fixed to the electrode unit 300, so that the metal foreign matter analysis step (S300) can more accurately analyze the presence or absence of the metal foreign matter 10 and the relative size difference of the metal foreign matter 10.

In addition, in the metal foreign matter movement step (S400) of the metal foreign matter inspection method according to the present embodiment, whether or not the metal foreign matter 10 moves in the direction of the fan unit 200 varies depending on whether the metal foreign matter 10 contains iron, and the type of the metal foreign matter can be distinguished based on this. That is, there is an advantage in that the cause of occurrence of the metal foreign matter 10 can also be grasped depending on the type of metal foreign matter 10 confirmed by the metal foreign matter inspection device 1000.

Although the invention has been described in detail above with reference to preferred embodiments thereof, it will be appreciated by those skilled in the art that the scope of the present disclosure is not limited thereto, and various modifications and improvements can be made in these embodiment without departing from the principles and sprit of the invention, the scope of which is defined in the appended claims and their equivalents.

## Claims

1. A metal foreign matter inspection device comprising:
a housing unit into which air containing a metal foreign matter flow;
an electrode unit which contacts the metal foreign matter contained in the air having flowed in the housing unit and acquires information about the metal foreign matter; and
a fan unit which blows air in one direction toward the metal foreign matter located on the electrode unit,
wherein the housing unit comprises an air storage unit which stores air containing the metal foreign matter and an air inflow unit located at an upper part of the housing unit, and
wherein the electrode unit is located at a lower part of the housing unit, and the fan unit is located on one side face of the housing unit.

2. The metal foreign matter inspection device of claim 1, wherein:
the presence or absence of the metal foreign matter and the size of the metal foreign matter are analyzed based on the information about the capacitance value according to time acquired by the electrode unit.

3. The metal foreign matter inspection device of claim 2, wherein:
air containing metal foreign matter having flowed in the air inflow unit moves along the direction of gravity in the air storage unit,
the metal foreign matter moving along the direction of gravity in the air storage unit is accumulated in the electrode unit, and
the presence or absence of the metal foreign matter and the size of the metal foreign matter are analyzed based on the difference in capacitance values during the time of accumulation of the metal foreign matter.

4. The metal foreign matter inspection device of claim 1, wherein:
the fan unit repeats the advancing and stopping of the blowing at regular time intervals, and
the inspection device analyzes the metal foreign matter based on the information acquired by the electrode unit in a state where blowing of the fan unit is stopped.

5. The metal foreign matter inspection device of claim 1,
further comprising a metal foreign matter collecting unit located apart from the fan unit along the blowing direction of the fan unit, and located on the opposite side of one side face of the housing unit where the fan unit is located.
wherein at least a part of the metal foreign matter located on the electrode unit move to the metal foreign matter collecting unit along the blowing direction of the fan unit.

6. The metal foreign matter inspection device of claim 5,
further comprising a magnet unit located at the lower part of the electrode unit,
wherein a ferrous metal foreign matter containing iron(Fe) among the metal foreign matter located on the electrode unit is fixed onto the electrode unit by the magnetic force of the magnet unit.

7. The metal foreign matter inspection device of claim 6, wherein:
the ferrous metal foreign matter fixed onto the electrode unit is removed by a cloth or brush that wipes the surface of the electrode unit.

8. The metal foreign matter inspection device of claim 6, wherein:
a non-ferrous metal foreign matter not containing iron(Fe) among the metal foreign matter located on the electrode unit is moved to the metal foreign matter collecting unit by the blowing of the fan unit.

9. The metal foreign matter inspection device of claim 8, wherein:
the non-ferrous metal foreign matter collected in the metal foreign matter collecting unit is removed as the metal foreign matter collecting unit is replaced with another metal foreign matter collecting unit.

10. A metal foreign matter inspection method, comprising:
an air inflow step of allowing air containing a metal foreign matter to flow into a housing unit;
a metal foreign matter information acquisition step of bring the metal foreign matter contained in the air having flowed in the housing unit into contact with an electrode unit to acquire information about the metal foreign matter; and
a metal foreign matter movement step of blowing air in one direction toward the metal foreign matter located on the electrode unit through a fan unit,
wherein the housing unit includes an air storage unit which stores air containing a metal foreign matter and an air inflow unit located at an upper part of the housing unit, and
wherein the electrode unit is located at a lower part of the housing unit, and the fan unit is located at one side face of the housing unit.

11. The metal foreign matter inspection method of claim 10,
further comprising a metal foreign matter analysis step of analyzing the presence or absence of the metal foreign matter and the size of the metal foreign matter based on information about the capacitance value over time acquired by the electrode unit.

12. The metal foreign matter inspection method of claim 11, wherein:
the metal foreign matter moves along the direction of gravity from the air inflow unit and the metal foreign matter that has moved along the direction of gravity is accumulated on the electrode unit, and
the metal foreign matter analysis step analyzes the size of the metal foreign matter based on the difference in capacitance values during the time of accumulation of the metal foreign matter.

13. The metal foreign matter inspection method of claim 11, wherein:
the fan unit in the metal foreign matter movement step repeats the advancing and stopping of the blowing at regular time intervals, and
the metal foreign matter information acquisition step and the metal foreign matter analysis step are performed in a state where blowing of the fan unit is stopped.

14. The metal foreign matter inspection method of claim 10, wherein:
a magnet unit located at the lower part of the electrode unit is further comprised,
wherein a ferrous metal foreign matter containing iron(Fe) among the metal foreign matter located on the electrode unit is fixed onto the electrode unit by the magnetic force of the magnet unit, and
after the metal foreign matter movement step, the ferrous metal foreign matter is fixed onto the electrode unit.

15. The metal foreign matter inspection method of claim 10,
further comprising a metal foreign matter collection step of allowing at least a part of the metal foreign matter located on the electrode unit to move along the blowing direction of the fan unit, thereby being collected by the metal foreign matter collecting unit,
wherein the metal foreign matter collecting unit is located apart from the fan unit along the blowing direction of the fan unit, and is located on the opposite side of one side face of the housing unit where the fan unit is located.
